# EUROPEAN PATENT APPLICATION

(11) **EP 3 578 886 A1**
(43) Date of publication of application: **11.12.2019**
(21) Application number: 18176396.2
(22) Date of filing: 07.06.2018
(51) Int. Cl.: F24F 3/12, F24F 11/79, F24F 11/72, F24F 11/74, B01F 13/00

(54) **AN AIR TREATMENT SYSTEM AND METHOD**

(71) Applicant: Koninklijke Philips N.V., 5656 AE Eindhoven (NL)
(72) Inventor: WRIGHT, Christopher John, 5656 AE Eindhoven (NL); LAWRENSON, Matthew John, 5656 AE Eindhoven (NL); BUIL, Vincentius Paulus, 5656 AE Eindhoven (NL); GEURTS, Lucas Jacobus Franciscus, 5656 AE Eindhoven (NL); OUWELTJES, Okke, 5656 AE Eindhoven (NL)
(74) Representative: de Haan, Poul Erik

(57) **Abstract**

An air treatment system combines a conventional air treatment device (such as an air purifier, humidifier or dehumidifier) with an ultrasound device for modifying the air flow created by the air treatment device. This enables a reduction in noise and/or power consumption to achieve a desired air treatment function.

## Description

### FIELD OF THE INVENTION

This invention relates to air treatment systems and methods, and in particular with control of the flow of treated air to an indoor space.

### BACKGROUND OF THE INVENTION

Air treatment devices, such as purifiers and humidifiers, typically use internal fans to drive air flow within a space being treated, such as room. The efficiency of the device depends in part on the ability of the fans to cycle the whole air volume within a room. In the case of air purifiers, devices are rated on this efficiency by the Clean Air Delivery Rate (CADR).

The placement of an air treatment device within a room or building can have a very significant effect on the efficiency of the device's function, due to the different air cycling flow created within the space as well as other factors such as proximity to users and pollutant sources. The provision of high quality, processed air to the user cannot therefore be guaranteed, as the location of high Air Quality (AQ) spaces generated by a device will be dependent on the existing flows within a room, the device placement and the geometry of the room.

All fan generated air flow will also result in a certain level of noise being produced. This will vary significantly based on fan speed and device design. This noise can be a problem for users, especially if used in the bedroom at night. Most air modification devices such as purifiers have low noise settings to reduce this problem, though it cannot be eliminated. Furthermore, the lower fan speeds may result in incomplete or slow air cycling within the room, impacting average air quality and delivery of processed air to the user.

A compromise therefore normally has to be found between the effectiveness of the air treatment in the complete volume, and the noise and efficiency of the air treatment device.

There is therefore a need for a device which can ensure a desired air treatment function, either to a full volume or at least to a user location, without excessive noise generation or efficiency losses.

### SUMMARY OF THE INVENTION

The invention is defined by the claims.

According to examples in accordance with an aspect of the invention, there is provided an air treatment system, comprising:
an air treatment device comprising an air flow generation system for delivering treated air with first air flow characteristics;
an air flow control device comprising an ultrasound source; and
a controller, wherein the controller is adapted to control the air flow generation system and the ultrasound source thereby to deliver treated air with second air flow characteristics which comprise a modification to the first air flow characteristics.

This system makes use of ultrasound to create air flows, to enhance or supplement the air flow created by an air treatment device. This may be used to increase air flows, for example to increase a clean air delivery rate (CADR), or enable a desired air flow to be achieved with reduced fan noise. The modification may allow regions in space to achieve an improved air quality compared to that which can be achieved by the air treatment device alone.

The air flow control device may be integrated into the same unit as the air treatment device, or it may be a physically separate unit.

The air treatment device for example comprises a humidifier or dehumidifier or an air purifier. By improving the air flow characteristics, cleaner air or air with a more comfortable relative humidity can be delivered to a user.

The air flow generation system for example comprises a fan, with a controllable fan speed setting. The fan speed provides a first level of control. However, high fan speeds, and hence large noise levels and high power consumption, may be avoided by using the modification provided by the air flow control device.

The air flow control device for example comprises an ultrasound acoustic streaming device. This enables directional generation of air flows, for example directed to a user.

The ultrasound source may have a controllable ultrasound focal diameter and/or controllable distance to a focal point. These are ways to impose control over the air flow modification.

The system may further comprise a sensor for sensing a user location relative to the system. In this way, the air flow modification may be targeted to improve the air quality for a user at a particular location.

The system may comprise an air quality sensor for providing air quality information to the controller. A target air quality may be set, and feedback from the air quality sensor may be used to control the air treatment process. The air quality information for example comprises a pollutant level and/or a relative humidity.

The system may further comprise an activity sensor for detecting an activity of a user. Different activities may require different levels of air quality, and the activity sensor allows this to be taken into account.

The activity sensor is for example for detecting a sleep state, coughing or sneezing. Different air treatment settings may be appropriate for these different activities.

The controller may be adapted to receive a target air flow rate to the user and/or an air quality target for the air flow to the user. In this way, the air treatment is controlled to achieve specific flow to a user rather than to achieve an air quality throughout the volume being treated. This may be achievable more efficiently.

The air flow control device for example has a controllable flow direction. This enables the air flow to specific locations (e.g. user locations or locations where the air treatment device is less effective) to be provided.

The invention also provides an air treatment method, comprising:
using an air flow generation system of an air treatment device to deliver treated air with first air flow characteristics; and
using an air flow control device comprising an ultrasound source to modify the first air flow characteristics to provide second air flow characteristics.

The combination of the air flow generation system and the air flow control device provide more efficient and/or less noisy air treatment in a volume.

The method may comprise controlling a fan speed setting of the air treatment device and an ultrasound focal diameter and/or distance to a focal point of the ultrasound source. The method may comprise selecting the first air flow characteristic and modifying the first air flow characteristic taking into account one or more of:
a user location;
air quality information; and
an activity of a user.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows an air treatment system comprising an air treatment device and an additional air flow control device;
Figure 2 shows an air treatment method; and
Figure 3 illustrates an example of a computer for implementing the controller of the system.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an air treatment system which combines a conventional air treatment device (such as an air purifier, humidifier or dehumidifier) with an ultrasound device for modifying the air flow created by the air treatment device. This enables a reduction in noise and/or power consumption to achieve a desired air treatment function.

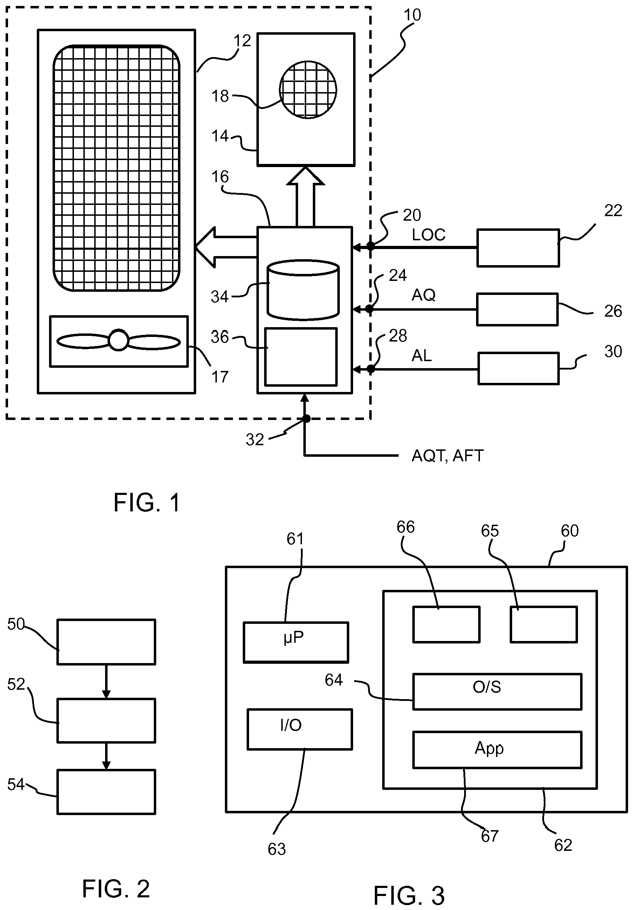

Figure 1 shows an air treatment system 10 comprising an air treatment device 12 and an additional air flow control device 14. The air treatment device 12 for example comprises a humidifier or dehumidifier or an air purifier. The air flow control device 14 for example comprises an ultrasound acoustic streaming device.

A controller 16 is used to control the air flow provided by the air treatment device and by the air flow control device to deliver treated air with air flow characteristics which comprise a modification to the air flow characteristics of the air treatment device.

The air treatment device 12 has an air flow generation system 17 in the form of a fan with fan speed settings and optionally also directional fan settings, for delivering treated air with first air flow characteristics.

These air flow characteristics for example at least an overall air flow rate. They may additionally comprise a relationship between flow rate and direction.

The air flow control device 14 comprises a ultrasound source 18. This system thus makes use of ultrasound to create air flows, to enhance or supplement the air flow created by the air treatment device. This may be used to increase air flows, for example to increase a clean air delivery rate (CADR), or enable a desired air flow to be achieved with reduced fan noise. The modification may allow regions in space to achieve an improved air quality compared to that which can be achieved by the air treatment device alone.

The effect that ultrasound propagation can be used to create air flows has been investigated in recent years. Ultrasound in air is attenuated much more rapidly than audible frequency sound. This attenuation results in a streaming effect whereby the air is pushed in the direction of ultrasound propagation. At high intensity levels, significant non-linearity occurs in the transmission of ultrasound through air, where the sound transmission properties of the air are significantly changed by the sound itself.

When a fan blows air across a room, the air flow typically decelerates and spreads out. The air flow created by a carefully controlled ultrasound array can maintain its narrow shape and accelerate as it moves away from the source.

Steerable ultrasound-driven air streams have been reported creating electronically steerable macroscopic self-accelerating beams in free space. A Bessel beam has the property of not spreading out as it propagates, but rather maintaining a narrow, tightly focused shape. Such beams may be generated by using a phased array of hundreds or thousands of ultrasound transducers. Each transducer converts an electrical signal into an ultrasound wave, and tuning the wavefronts of these emitted waves controls the direction of the air flow. The ultrasound field also produces kinetic energy, which accelerates the air stream as it propagates forward. Thus, the location with a highest velocity can be located remote from the sound source, and this focal distance as well as the direction is tunable.

Tilting the ultrasound array is not required to control the beam direction. Instead, the beam is electronically steerable by tuning the wavefronts, which forms a tilted beam without tilting the array.

This phenomenon is for example referred to as "acoustic streaming".

An "audio spotlight" is a directional speaker which uses this acoustic streaming. In a directional speaker, sound can be heard only along the path of the beam, or it appears to radiate from any surface that the beam strikes. This technology allows a beam of sound to be projected over a long distance to be heard only in a small well-defined area, For a listener outside the beam the sound pressure decreases substantially.

Several consumer audio spotlight products are currently in development and production that can produce targeted sound. They vary in their focusing, frequency, maximum power and other parameters. Thus, commercially available systems exist which make use of acoustic streaming.

Focused ultrasonic fields are also used in other products such as for acoustic holography and haptic feedback. Haptic feedback and interface devices use the force of the ultrasonic reflection on the skin surface, or puffs of air from streaming effects to generate haptic sensations. The generation of streaming effects using focused ultrasound has also been investigated recently for targeted odorant delivery.

The air flow control device is capable of producing a directed air flow such as to increase the provision of processed air to the user.

The ultrasound creates an air flow via a non-linear absorption effect of ultrasound transmission as it passes through the air. The ability to design the shape of the sound field with a phased array as explained above gives a tradeoff between a several factors:
- The frequency defines the absorption coefficient and minimum focused beam diameter. As higher frequencies are absorbed more, they will be able to produce more significant air flows but at shorter distances;
- The focusing defines the dynamics of the air flow which is produced. A thin focus may move air rapidly in a small area but may be less effective at causing bulk mixing of air within a room for example; and
- A larger amplitude correlates with a higher air flow rate but may cause unwanted heating of the air or audible sound generation.

The air flow control device is located in a similar direction from the user as the air treatment device (i.e. preferably located close to the air treatment device) so that it provides a flow contribution which will have a predictable effect on the provision of treated air. An optimal position of the air treatment device (e.g. air purifier) may for example be suggested to the user during installation to be below a connected audio spotlight device. Thus, an existing audio spotlight device may be controlled to provide the desire air flow modification, for example being controlled not to generate audible sound.

The air flow control device has various settings to alter the created air flow as outlined above. These maybe monitored and altered remotely. By controlling these settings, the ultrasound source has a controllable ultrasound focal diameter and/or controllable distance to a focal point.

The air flow control device 14 maybe integrated into the same unit as the air treatment device 17, or it maybe a physically separate unit (as schematically represented in Figure 1).

The controller 16 has a first input 20 for receiving location information "LOC" received from first sensor 22 for sensing a user location relative to the system. In this way, the air flow modification may be targeted to improve the air quality for a user at a particular location.

The controller 16 has a second input 24 for receiving an air quality information "AQ" from a second sensor 26 for providing air quality information. The air quality information for example comprises a pollutant level and/or a relative humidity sensor.

The controller 16 has a third input 28 for receiving activity level information "AL" from a third sensor 30 for detecting an activity of a user. Different activities may require different levels of air quality, and the activity sensor allows this to be taken into account. The activity sensor 30 for example may detect a sleep state, coughing or sneezing. Different air treatment settings may be appropriate for these different activities.

The various sensors for example are used to measure the quality of air being provided to the user, such as relative humidity or pollutant intensity values and also labels for pollutant type. The air quality sensors may comprise particulate matter sensors carried by the user or a user respiration monitor.

The controller 16 has a fourth input 32 for target settings, such as an air quality target "AQT" and an air flow target "AFT". Feedback from the air quality sensor 26 may be used to control the air treatment process to reach the desired target levels..

The controller 16 comprises a database 34 and a processor 36. The controller 16 may be an integral part of the air treatment device 12 or the air flow control device 14. It may instead be provided by another device which communicates wirelessly with the air treatment device 12 and the air flow control device 14 to implement the desired control. The controller may for example be implemented as an app running on a smart phone or tablet. The sensor data may then also be received as wireless signals provided to the controller.

The processor 36 of the controller hosts an algorithm which determines a desired flow rate of air to the user based on the sensed air quality data. The desired flow rate may be based on a level of total clean air provision to the user, such as in cubic meters per minute.

The database 34 includes a lookup table containing pre-defined combinations of settings of the air flow control device and the air treatment device to achieve target air flow characteristics. These settings include fan speed settings for the air treatment device and settings for the air flow control device, such as direction, ultrasound focal diameter, distance of the focal point from the user, and ultrasound intensities. The combinations of settings for example aim to achieved different bands of air flow characteristics. The settings of the ultrasound air flow control device are for example set within certain limits to avoid audibility, high power consumption or user comfort disruption.

The processor receives as input the information provided by any of the sensors and the target levels. From this information, it generates "desired flow characteristics". These are input to the look up table which then generates the required "flow control settings" (for both the air flow control device and the air treatment device).

Figure 2 shows the method of operation to provide an air treatment method. The method comprises:
in step 50, using the air flow generation system of the air treatment device to deliver treated air with first air flow characteristics; and
in step 52, using the air flow control device to modify the first air flow characteristics to provide second air flow characteristics.

The combination of the air flow generation system and the air flow control device provide more efficient and/or less noisy air treatment in a volume. Feedback is provided in step 54 relating to one or more of a user location, air quality information (either generally in the space being treated or specifically at the user location), and an activity of a user.

The algorithm operated by the processor 36 determines the desired air flow characteristics by querying the database using the collected sensor data and target levels. For example, high pollutant intensity readings may correspond to proportionally higher air flow to the user to increase the provision of clean air from an air purification device.

The current distance of the user distance from the air treatment device, as determined from the location information, and the current air flow settings may be used to query the lookup table. For example, if the air flow settings of the air treatment device are based on a low fan speed setting while the user is relatively far away, a strong targeted flow may be created by the air flow generation device to deliver the clean air to the user.

The direction and distance of the flow focus of the air flow control device may be obtained from the user location information to determine the required settings of the air flow control device. Examples of how this may be achieved are explained below.

Sensors on a smartphone may detect that it is being carried in a pocket of the user. With the desired flow characteristics having been obtained by the algorithm, the focus for the air flow control device may then be targeted a fixed distance away from the user and above the phone location by a pre-defined average torso height, thereby to provide a flow towards the user's head or upper body that does not cause discomfort.

A video monitoring system and depth sensor may instead be used associated with the air flow control device to recognize a user's head and calculate its direction and distance.

Optionally, in cases where the desired flow characteristics would require settings which are outside the possible range settings of the air flow control device, a function may be included to select the closest available settings (e.g. a lower power or frequency). In some cases, such as where a direction is not achievable by the air flow control device, the desired flow characteristics may be rejected.

In some situations, the general flow created by the air treatment device may be known to provide poor or sub-optimal air quality such as while a user is sleeping or is having respiratory trouble (coughing or having an asthma attack), where air flows from the device may not effectively reach or mix with the user's breathing space. In such cases, a targeted flow from the air flow control device may be provided, in response to detection by the activity sensor that senses a user sleep state or respiratory condition. Pre-set flow control settings may then be chosen for that situation.

There may also be pre-set flow control settings to provide additional effects, for example by creating an audible sound or noticeable air flow. These additional effects may be either desired by the user, or just tolerable for the user in order to achieve the desired air flow characteristics. Thus, if the desired air flow characteristics cannot be achieved without creating an audible sound, the user may opt to allow audible sound. Sensors may be used to sense the sound levels or the air flow at the user's location, such as a microphone on the user's smartphone or an air flow monitoring system. Thus, the targets may then include tolerable levels of noise or detectable air flow.

The sensing may be used as a feedback control input. The algorithm may then gradually alter the flow control settings for the air flow control device to increase the flow until the flow reaches a threshold or a low-amplitude sound is detected in proximity to the user.

The flow direction may be adjusted in a feedback manner using the sensing options to provide a more exact direction to the user.

A pre-defined set of flow control settings may be used in reaction to detection of events such as a sneeze or cough, for which a rapid air flow response is desirable. A sheet of intense ultrasound may be directed in front of the user's face directed towards the floor, thus reducing the potential spread of droplets through the air.

A brief outline will now be provided of the type of air flow that can be created by the ultrasound air flow control device. By way of example, an intensity level of 130 dB sound pressure level (SPL) has been report for a device operating at 60kHz. A 50W device has also been reported to generate 85dB at 1kHz. Using the properties of air (attenuation a = 1.3 db/m, speed of sound c = 344 m/s, acoustic impedance z = 413 rayls), the acoustic thrust can be calculated.

The maximum force generated is approximately 15 mN/m³ for a 130 dB SPL device at 20 degrees Celsius and 50% humidity. Practically, this force is achieved only at the focal maximum. The mean force per unit volume of air for a given volume would therefore depend on the sound field intensity distribution.

At the maximum intensity point of a 50W 85dB device, the acceleration of air may be calculated as 12 mm/s². Using qualitative estimations of the focal field produced, the average acceleration would be approximately 6 mm/s² for a few meters in a tight column originating a short distance from the sound source (approx. 0.5m³ volume, with smaller acceleration effects also occurring outside this volume).

In reality, the acceleration generated may be significantly higher as non-linear effects (changes to sound carrying properties of air caused by the sound itself) also need to be taken into account.

For products with tuneable focussing, a tradeoff is possible between the volume of air affected and the magnitude of acceleration created. For example, a tighter focus could be used to rapidly produce a flow in a small volume, or a broad focus for a gentle bulk flow over a larger volume.

The frequency production capabilities of a device will also significantly affect both the focal field that can be produced and the acceleration of air. A higher frequency will result in larger possible flow accelerations.

The system described above makes use of a controller for processing data.

Figure 3 illustrates an example of a computer 60 for implementing the controller or processor described above.

The computer 60 includes, but is not limited to, PCs, workstations, laptops, PDAs, palm devices, servers, storages, and the like. Generally, in terms of hardware architecture, the computer 60 may include one or more processors 61, memory 62, and one or more I/O devices 63 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 61 is a hardware device for executing software that can be stored in the memory 62. The processor 61 can be virtually any custom made or commercially available processor, a central processing unit (CPU), a digital signal processor (DSP), or an auxiliary processor among several processors associated with the computer 60, and the processor 61 may be a semiconductor based microprocessor (in the form of a microchip) or a microprocessor.

The memory 62 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 62 may incorporate electronic, magnetic, optical, and/or other types of storage media. Note that the memory 62 can have a distributed architecture, where various components are situated remote from one another, but can be accessed by the processor 61.

The software in the memory 62 may include one or more separate programs, each of which comprises an ordered listing of executable instructions for implementing logical functions. The software in the memory 62 includes a suitable operating system (O/S) 64, compiler 65, source code 66, and one or more applications 67 in accordance with exemplary embodiments.

The application 67 comprises numerous functional components such as computational units, logic, functional units, processes, operations, virtual entities, and/or modules.

The operating system 64 controls the execution of computer programs, and provides scheduling, input-output control, file and data management, memory management, and communication control and related services.

Application 67 may be a source program, executable program (object code), script, or any other entity comprising a set of instructions to be performed. When a source program, then the program is usually translated via a compiler (such as the compiler 65), assembler, interpreter, or the like, which may or may not be included within the memory 62, so as to operate properly in connection with the operating system 64. Furthermore, the application 67 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 63 may include input devices such as, for example but not limited to, a mouse, keyboard, scanner, microphone, camera, etc. Furthermore, the I/O devices 63 may also include output devices, for example but not limited to a printer, display, etc. Finally, the I/O devices 63 may further include devices that communicate both inputs and outputs, for instance but not limited to, a network interface controller (NIC) or modulator/demodulator (for accessing remote devices, other files, devices, systems, or a network), a radio frequency (RF) or other transceiver, a telephonic interface, a bridge, a router, etc. The I/O devices 63 also include components for communicating over various networks, such as the Internet or intranet.

When the computer 60 is in operation, the processor 61 is configured to execute software stored within the memory 62, to communicate data to and from the memory 62, and to generally control operations of the computer 60 pursuant to the software. The application 67 and the operating system 64 are read, in whole or in part, by the processor 61, perhaps buffered within the processor 61, and then executed.

When the application 67 is implemented in software it should be noted that the application 67 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. An air treatment system (10), comprising:
an air treatment device (12) comprising an air flow generation system (17) for delivering treated air with first air flow characteristics;
an air flow control device (14) comprising an ultrasound source (18); and
a controller (16), wherein the controller is adapted to control the air flow generation system (17) and the ultrasound source (18) thereby to deliver treated air with second air flow characteristics which comprise a modification to the first air flow characteristics.

2. A system as claimed in claim 1, wherein the air treatment device (12) comprises a humidifier or dehumidifier or an air purifier.

3. A system as claimed in claim 1 or 2, wherein the air flow generation system (17) comprises a fan, with a controllable fan speed setting.

4. A system as claimed in any one of claims 1 to 3, wherein the air flow control device (14) comprises an ultrasound acoustic streaming device.

5. A system as claimed in claim 4, wherein the ultrasound source (18) has a controllable ultrasound focal diameter and/or controllable distance to a focal point.

6. A system as claimed in any one of claims 1 to 5, further comprising a sensor (22) for sensing a user location relative to the system.

7. A system as claimed in any one of claims 1 to 6, comprising an air quality sensor (26) for providing air quality information to the controller.

8. A system as claimed in claim 7, wherein the air quality information comprises a pollutant level and/or a relative humidity.

9. A system as claimed in any one of claims 1 to 8, further comprising an activity sensor (30) for detecting an activity of a user, for example for detecting a sleep state, coughing or sneezing.

10. A system as claimed in any one of claims 1 to 9, wherein the controller (16) is adapted to receive a target air flow rate (AFT) to the user and/or an air quality target (AQT) for the air flow to the user.

11. A system as claimed in any one of claims 1 to 10, wherein the air flow control device has controllable flow direction.

12. An air treatment method, comprising:
(50) using an air flow generation system of an air treatment device to deliver treated air with first air flow characteristics; and
(52) using an air flow control device comprising an ultrasound source to modify the first air flow characteristics to provide second air flow characteristics.

13. A method as claimed in claim 13, comprising controlling a fan speed setting of the air treatment device and an ultrasound focal diameter and/or distance to a focal point of the ultrasound source.

14. A method as claimed in claim 12 or 13, comprising selecting the first air flow characteristic and modifying the first air flow characteristic taking into account one or more of:
a user location;
air quality information; and
an activity of a user.

15. A computer program comprises code means which is adapted, when said program is run on a computer, to implement the method of any one of claims 12 to 14.
